# EUROPÄISCHE PATENTSCHRIFT

(11) **EP 3 748 190 B1**
(45) Veröffentlichungstag und Bekanntmachung des Hinweises auf die Patenterteilung: **19.11.2025**
(21) Anmeldenummer: 19178202.8
(22) Anmeldetag: 04.06.2019
(51) Int. Cl.: F16G 13/06, F16G 13/18

(54) **OPTIMIERTE BOLZENFÜGEGEOMETRIE**
OPTIMIZED BOLT JOIN GEOMETRY
GÉOMÉTRIE D'ASSEMBLAGE DE BOULON OPTIMISÉE

(43) Veröffentlichungstag der Anmeldung: 09.12.2020
(73) Patentinhaber: iwis mobility systems GmbH & Co. KG, 81369 München (DE)
(72) Erfinder: Urbanek, Andreas, 81377 München (DE); Ritz, Andreas, 81379 München (DE); Khani, Bahram, 81927 München (DE)
(74) Vertreter: Grünecker Patent- und Rechtsanwälte PartG mbB

(56) Entgegenhaltungen:
- WO-A1-03/091599
- WO-A1-2017/041797
- FR-A1- 2 792 385
- JP-A- 2011 094 660

## Beschreibung

Die vorliegende Erfindung betrifft eine Kette für einen Kettentrieb mit einander abwechselnden Innenkettengliedern und Außenkettengliedern, die jeweils mittels eines Kettengelenks gelenkig miteinander verbunden sind, wobei jedes Außenkettenglied zwei Außenlaschen mit jeweils zwei Öffnungen und zwei Bolzen umfasst, und die Bolzen und die Öffnungen jeweils mittels einer Pressverbindung miteinander verbunden sind, so dass die Bolzen die Außenlaschen beabstandet zueinander halten.

Derartige Ketten werden zur Übernahme von ruhenden und schwellenden Lasten als Antriebs-, Transport- oder Förderketten bei kleinen und mittleren Kettengeschwindigkeiten und als Getriebeketten bei hohen Kettengeschwindigkeiten zur Leistungsübertragung zwischen achsparallelen Wellen eingesetzt. Diese Ketten finden im gesamten Maschinenbau Verwendung und werden unter anderem im Werkzeugmaschinenbau, in Druckereimaschinen, in der Textil- und Verpackungsindustrie, in der Transport- und Fördertechnik, in der Landmaschinen- und Bautechnik, im Wasserbau, Bergbau und in Hüttenbetrieben sowie im Kraftfahrzeug- und Motorenbau eingesetzt.

So ist beispielsweise aus der WO 03/091599 A1 eine Hülsenkette bekannt, insbesondere für Fahrrad-Antriebe, mit einander abwechselnden Außenkettengliedern und Innenkettengliedern. Die Außenkettenglieder und die Innenkettenglieder sind mittels Kettengelenken gelenkig miteinander verbunden. Die Kettengelenke werden durch Bolzen und Hülsen ausgebildet. Insbesondere bei Fahrrädern mit Kettenschaltung sind das vordere und das hintere Kettenrad je nach eingestelltem Gang versetzt zueinander angeordnet, sodass die Kette schräg verläuft. Um auch bei schräg verlaufender Kette einen flächigen Kontakt zwischen den Hülsen und den darin angeordneten Bolzen zu ermöglichen, ist vorgesehen, dass die Außenfläche der Bolzen, zumindest in einem mittigen Bereich, und die Innenfläche der Hülsen ballig bzw. kugelförmig ausgebildet sind. Zudem weist jeder Bolzen ein erstes Ende und ein zweites Ende auf. Mit diesen Enden sind die Bolzen in Öffnungen in den Laschen der Außenkettenglieder eingepresst. Die Enden der Bolzen sind zylindrisch.

Die FR 2 792 385 A1 zeigt eine weitere Fahrradkette, bzw. ein Sonderkettenglied für eine Fahrradkette, das ein schnelles Verbinden der Fahrradkette ermöglicht. Das Sonderkettenglied umfasst zwei Außenlaschen mit je zwei runden Bohrungen, zwei Hülsen sowie zwei schnellkuppelnde Bolzen. Die Bolzen weisen an einem Ende einen Kopf mit vergrößertem Durchmesser und am anderen Ende einen konischen Endbereich auf. Die beiden Hülsen sind in die Öffnungen einer der Außenlaschen eingesteckt und mittels einer Schweißverbindung mit der Außenlasche verbunden. Die Bolzen sind in den Hülsen aufgenommen und in diesen axial gesichert, um ein Abziehen der anderen Außenlasche von den Hülsen zu verhindern. Dazu ist in jeder Hülse eine Rippe vorgesehen, die eine Ringschulter ausbildet. Jeder Bolzen weist ein Zwischenteil mit verringertem Durchmesser auf, an das sich eine Ringschulter mit vergrößertem Durchmesser anschließt. Im zusammengefügten Zustand von Hülse und Bolzen ist die Rippe der Hülse in dem Zwischenteil mit verringertem Durchmesser des Bolzens angeordnet und die beiden Ringschultern liegen aneinander an. Der Kopf des Bolzens liegt in einem Bereich der Bohrung in der Außenlasche an, der einen vergrößerten Durchmesser aufweist. Das konische Endteil des Bolzens ist mit einem abgeschrägten Rand versehen, um das Einführen des Bolzens in die Hülse zu erleichtern.

Die JP 2011 094660 A offenbart eine Rollenkette mit einander abwechselnden Innenkettengliedern und Außenkettengliedern. Die Innenkettenglieder und die Außenkettenglieder sind über Kettengelenke miteinander verbunden, wobei jedes Kettengelenk durch eine Hülse und einen Bolzen ausgebildet ist. Die Bolzen sind in Laschenaugen der Außenlaschen eingepresst. Sowohl die Laschenaugen der Außenlaschen als auch die darin eingepressten Bolzen sind zumindest bereichsweise konisch ausgebildet. Durch diese Ausgestaltung der Bolzen und der Laschenaugen in den Außenlaschen kann die Verbindung zwischen den Bolzen und den Außenlaschen einfach geöffnet und die Kette auf die gewünschte Länge gebracht werden, ohne Schäden an der Innenseite der Hülse zu erzeugen.

Vorzugsweise können solche Ketten als Hülsen- oder Rollenketten ausgebildet sein. Solche Ketten setzen sich aus Innenkettengliedern und Außenkettengliedern zusammen, wobei jedes Innenkettenglied einer Rollenkette zwei Innenlaschen mit jeweils zwei Öffnungen, zwei in die Öffnungen der Innenlaschen eingepressten Hülsen und zwei auf den Hülsen drehbar angeordnete Rollen aufweist. Bei Hülsenketten verzichtet man auf die beiden Rollen, sodass im Durchmesser entsprechend vergrößerte Hülsen direkt mit dem Kettenrad in Eingriff kommen. Ein Außenkettenglied umfasst zwei Außenlaschen mit ebenfalls jeweils zwei Öffnungen und zwei Bolzen, die in die Öffnungen der Außenlaschen eingepresst sind. Der Presssitz bzw. die Übermaßpassung zwischen den Bolzen und den Öffnungen der Außenlaschen ist deutlich höher als im Maschinenbaubereich üblich. Die Außenkettenglieder sind versetzt zu den Innenkettengliedern angeordnet, wobei die Bolzen der Außenkettenglieder durch die Hülsen der Innenkettenglieder geführt sind, so dass die Bolzen der Außenkettenglieder und die Hülsen der Innenkettenglieder Kettengelenke ausbilden.

In fast allen Kettenanwendungen durchläuft jedes Kettenglied Last- und Leertrum und unterliegt somit wechselnden Beanspruchungs- bzw. Spannungszuständen. Es handelt sich also um eine dynamische bzw. periodisch wechselnde Belastung. Ein wesentlicher Wert für die Auslegung der Ketten ist daher die Dauerfestigkeit. Im Lastbereich unterhalb der Dauerfestigkeit kann eine Kette betrieben werden, ohne dass sie im Laufe des Einsatzes, vorzugsweise also der Lebensdauer des Motors, infolge eines Bauteilversagens durch Bruch ausfallen wird. Trotz des hohen Presssitzübermaßes zwischen den Bolzen und den Öffnungen in den Außenlaschen hat sich gezeigt, dass die Dauerfestigkeit der Ketten nicht immer ausreichend ist. Entgegen der Erwartungen ist die Dauerfestigkeit bei höherem Presssitzübermaß zwischen Bolzen und Öffnungen in den Außenlaschen geringer als bei niedrigem Presssitzübermaß.

Es ist daher die Aufgabe der vorliegenden Erfindung, eine Kette für einen Kettentrieb bereitzustellen, die die aus dem Stand der Technik bekannten Nachteile vermeidet und insbesondere zu einer höheren Dauerfestigkeit führt.

Diese Aufgabe wird erfindungsgemäß dadurch gelöst, dass im Bereich der Pressverbindung zwischen den Bolzen und den Öffnungen in den Außenlaschen eine Fügefase ausgebildet ist und wobei der Fasenwinkel der Fügefase 0,3° bis 2°, bevorzugt 0,5° bis 1°, beträgt

Wie bereits beschrieben, sind bei den Ketten die zwischen Bolzen und Öffnungen in den Laschenaugen ausgebildeten Übermaßpassungen sehr hoch und auch deutlich höher als im Maschinenbaubereich üblich. Das minimale, auf den Durchmesser bezogene Presssitzübermaß zwischen Bolzen und Öffnungen der Außenlaschen entspricht bereits dem 1,5-fachen maximalen bezogenen Presssitzübermaß im allgemeinen Maschinenbau. Der Vergleich der maximalen bezogenen Presssitzübermaße ergibt einen Faktor >4. Es hat sich gezeigt, dass in der Montage der Außenkettenglieder beim Fügen von Außenlaschen und Bolzen Späne auftreten können. Die Simulation des Fügevorgangs zeigt deutliche plastische Verformungen im Bereich der Öffnungen der Außenlaschen. Dies führt zu einer veränderten Pressung zwischen den Bolzen und den Öffnungen in den Außenlaschen. Durch die plastische Verformung unterscheidet sich die resultierende Pressung zwischen den Bolzen und den Öffnungen in den Außenlaschen erheblich vom angestrebten Idealzustand. In bestimmten Bereichen des Presssitzes wird nur eine sehr kleine Pressung erreicht. Durch die Fügefase im Bereich der Pressverbindung zwischen den Bolzen und den Öffnungen in den Außenlaschen wird die Zentrierung zwischen Bolzen und Öffnungen beim Fügen erleichtert und die plastische Verformung im Bereich der Öffnungen der Außenlaschen reduziert bzw. vermieden. Dadurch wird ein Presssitz erreicht, welcher zu einer gleichmäßigeren und hohen Pressung zwischen Bolzen und Lasche und damit zur gewünschten Dauerfestigkeit führt. Der Fasenwinkel ist im vorliegenden Fall der Winkel zwischen der Verlängerung der Mantelfläche des zylindrischen Mittelteils des Bolzens und der Umfangsfläche der Fügefase. Es hat sich gezeigt, dass bei Fasenwinkeln in den angegebenen Bereichen ein besonders vorteilhafter Effekt, d.h. eine gute Dauerfestigkeit der Außenlaschen bei gleichzeitig gutem Halt der Presspassung zwischen Bolzen und Öffnungen der Außenlaschen, erzielt wird.

In einer Variante kann vorgesehen werden, dass die Fügefase Bestandteil der Pressverbindung zwischen den Bolzen und den Öffnungen in den Außenlaschen ist. Die Fügefase ist also in dem Bereich ausgebildet, in dem der Presssitz tatsächlich realisiert wird. Dadurch wird eine ungewollte plastische Verformung im Eintrittsbereich der Öffnungen in den Außenlaschen vermieden. Die Fügefase kann sich dennoch in eine oder beide Richtungen über die Pressverbindung hinaus erstrecken.

In einer einfachen Ausgestaltung ist vorgesehen, dass die Fügefase an den Bolzen ausgebildet ist. Die Fügefase ist eine Verringerung des Außendurchmessers des Bolzens. Am Bolzen ist diese Fügefase einfach herstellbar. Es wäre aber auch denkbar, dass die Öffnungen in den Außenlaschen eine Fügefase aufweisen.

Vorzugsweise kann die Länge der Fügefase etwa 0,4 bis 2,5 mm, bevorzugt 0,6 bis 1,5 mm betragen. Es hat sich gezeigt, dass bei einer Länge im angegebenen Bereich eine gute Montage ermöglicht wird und dennoch sichergestellt ist, dass ein ausreichend hoher Presssitz zwischen Bolzen und Öffnungen in den Außenlaschen und damit eine gute Dauerfestigkeit erreicht wird. Auch bei Industrieketten kann die Ausbildung von Fügefasen im Bereich der Pressverbindung zwischen den Öffnungen in den Laschen und den Bolzen vorteilhaft sein. Hier kann die Länge der Fügefase dann größer sein als oben angegeben, da auch die Laschenbreite deutlich höher sein kann.

Weiterhin kann vorgesehen sein, dass die Länge der Fügefase etwa der Dicke der Außenlaschen entspricht. In diesem Fall ist die Fügefase nur in dem Bereich ausgebildet, in dem tatsächlich eine Pressverbindung zwischen den Bolzen und den Öffnungen in den Außenlaschen ausgebildet wird. Die anderen Bereiche der Bolzen, insbesondere der mittlere Bereich, der zusammen mit den Hülsen der Innenkettenglieder das Kettengelenk ausbildet, werden nicht verändert.

Besonders bevorzugt weist jeder Bolzen an beiden Enden eine Fügefase auf. Somit wird an allen Öffnungen der Außenlaschen eine gute Passung zwischen den Bolzen und den Außenlaschen erzielt, und damit die erforderliche Dauerfestigkeit erreicht.

Eine einfache Herstellbarkeit der Fügefase kann dadurch erreicht werden, dass die Fügefase einen linearen Verlauf aufweist. D.h., die Fügefase ist dann konusförmig ausgebildet, hat als die Form eines geraden Kreiskegelstumpfs. Dadurch wird eine einfache Montage der Kette ermöglicht.

Es kann aber auch vorgesehen werden, dass die Fügefase einen progressiven oder einen degressiven Verlauf aufweist. Dadurch kann der Presssitz zwischen den Bolzen und den Außenlaschen verbessert werden.

Vorteilhafterweise können die Bolzen an beiden Enden am Übergang von ihren Stirnseiten zu ihrer Umfangsfläche abgerundet sein. Dies vereinfacht die Montage bzw. das Zentrieren und Einführen der Bolzen in die Laschenaugen. Bevorzugterweise beträgt der Radius etwa 0,4 mm.

Ferner bezieht sich die Erfindung auch auf einer Verwendung eines Bolzens in eine oben beschriebene Kette. Auch hier besteht die Aufgabe der vorliegenden Erfindung darin, einen Bolzen bereitzustellen, der eine einfache Montage der oben beschriebenen Kette ermöglicht und zu einer hohen Dauerfestigkeit der Kette führt. Diese Aufgabe wird erfindungsgemäß dadurch gelöst, dass an beiden Enden des Bolzens Fügefasen ausgebildet sind und wobei der Fasenwinkel der Fügefase 0,3° bis 2°, bevorzugt 0,5° bis 1°, beträgt. Der Fasenwinkel ist im vorliegenden Fall der Winkel zwischen der Verlängerung der Mantelfläche des zylindrischen Mittelteils des Bolzens und der Umfangsfläche der Fügefase. Es hat sich gezeigt, dass bei Fasenwinkeln in diesen Bereichen ein besonders vorteilhafter Effekt, d.h. eine gute Dauerfestigkeit der Außenlaschen bei gleichzeitig gutem Halt der Presspassung zwischen Bolzen und Öffnungen der Außenlaschen, erzielt wird. In der Regel ist es dabei von Vorteil, wenn die Fügefasen an beiden Enden des Bolzens identisch zueinander ausgebildet sind, es ist aber auch denkbar, die Fügefasen unterschiedlich und ggf. randomisiert, also nach einem Zufallsprinzip, auszubilden. Die Fügefasen weisen weiterhin die oben beschriebenen Merkmale auf.

Im Folgenden wird die Erfindung mit Hilfe von Figuren näher beschrieben. Es zeigen:
Fig. 1: Schnitt durch ein Innenkettenglied einer Hülsenkette,
Fig. 2: Schnitt durch ein Außenkettenglied einer Hülsenkette,
Fig. 3: Schnitt durch eine Hülsenkette umfassend die in Fig. 1 und Fig. 2 gezeigten Innenkettenglieder und Außenkettenglieder und
Fig. 4: Vergrößerte Darstellung eines Bolzens der Hülsenkette aus Fig. 3.

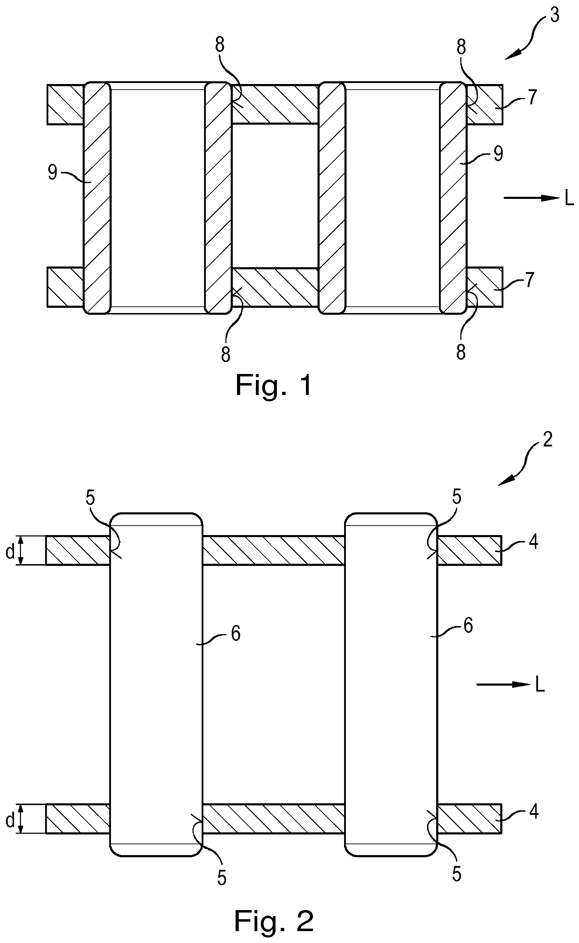

Fig. 1 zeigt eines der Innenkettenglieder 3 einer Hülsenkette. Jedes Innenkettenglied 3 umfasst zwei Innenlaschen 7, die jeweils zwei Öffnungen 8 aufweisen. Die beiden Innenlaschen 7 jedes Innenkettenglieds 3 sind in Längsrichtung L der Kette 1 ausgerichtet. In die Öffnungen 8 der Innenkettenglieder 3 sind Hülsen 9 eingepresst. Die Innenlaschen 7 sind jeweils auf den Enden der Hülsen 9 angeordnet, sodass die Innenlaschen 7 durch die Hülsen 9 quer zur Längsrichtung L der Kette 1 beabstandet zueinander gehalten werden.

In Fig. 2 ist eines der Außenkettenglieder 2 einer Hülsenkette gezeigt. Jedes Außenkettenglied 2 umfasst zwei parallel zueinander angeordnete Außenlaschen 4, die jeweils zwei Öffnungen 5 aufweisen. Die Außenlaschen 4 weisen eine Dicke d auf. In die Öffnungen 5 der Außenlaschen 4 sind Bolzen 6 eingepresst, sodass zwischen den Öffnungen 5 und den Bolzen 6, in dem Bereich, in dem die Bolzen 6 in den Öffnungen 5 angeordnet sind, eine Pressverbindung 11 ausgebildet ist. Die Außenlaschen 4 sind jeweils an den Enden der Bolzen 6 angeordnet, sodass die Außenlaschen 4 durch die Bolzen 6 quer zur Längsrichtung L der Kette 1 beabstandet zueinander gehalten werden.

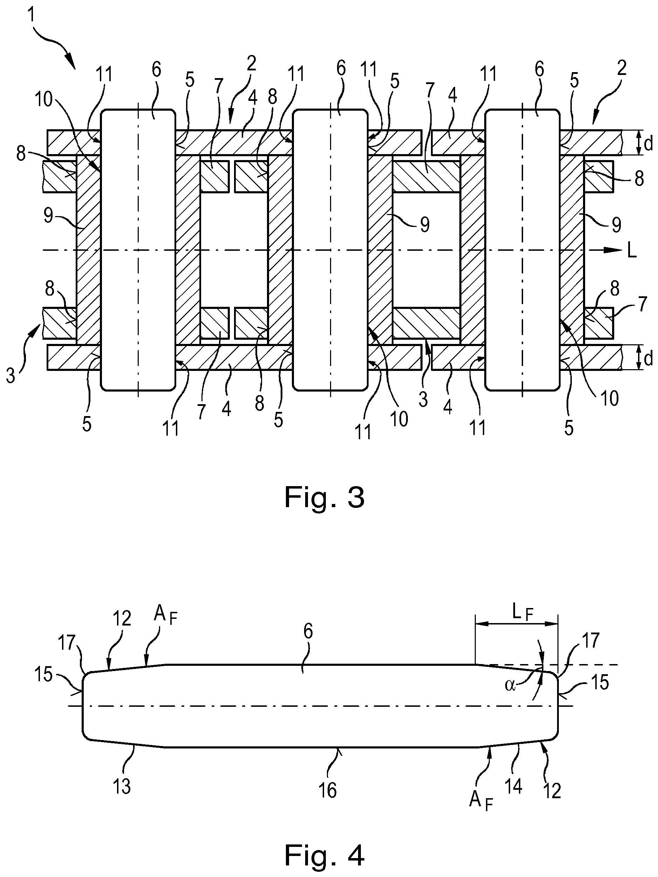

In Fig. 3 ist eine Kette 1 im Schnitt quer zu ihrer Längsrichtung L dargestellt. Die Kette 1 ist eine Hülsenkette und umfasst abwechselnd angeordnete Außenkettenglieder 2 und Innenkettenglieder 3. Die in Fig. 1 gezeigten Innenkettenglieder 3 und die in Fig. 2 gezeigten Außenkettenglieder 2 sind miteinander verbunden, indem die Bolzen 6 der Außenkettenglieder 2 sich durch die Hülsen 9 der Innenkettenglieder 3 erstrecken. Die Bolzen 6 und die Hülsen 9 bilden daher die Kettengelenke 10 aus.

Im Bereich jeder Pressverbindung 11 zwischen den Bolzen 6 und den Öffnungen 5 in den Außenlaschen 4 ist eine Fügefase 12 ausgebildet. Diese Fügefase 12 wird im Folgenden unter Bezug auf Fig. 4 näher beschrieben.

In Fig. 4 ist exemplarisch ein Bolzen 6 der Kette 1 aus Fig. 3 vergrößert dargestellt. Der Bolzen 6 ist nicht maßstabsgetreu. Der Bolzen 6 weist an jedem seiner Enden 13, 14 eine Fügefase 12 auf. Die Fügefasen 12 an beiden Enden des Bolzens 6 sind identisch zueinander ausgebildet. Wie bereits beschrieben, ist es auch denkbar, die Fügefasern unterschiedlich und ggf. randomisiert, also nach einem Zufallsprinzip, auszubilden. Die Fügefasen 12 sind in dem Bereich des Bolzens 6 ausgebildet, der im fertig montierten Zustand der Kette 1 in den Öffnungen 5 der Außenlaschen 4 angeordnet ist. Die Fügefase kann sich auch an beiden Seiten über die Außenlaschen 4 hinaus erstrecken. Im vorliegenden Kontext ist unter eine Fügefase ein Bereich des Bolzens zu verstehen, in der der Durchmesser des Bolzens abnimmt, sodass die Montage der Bolzen 6 in der jeweiligen Öffnung 5 der Außenlaschen erleichtert wird. Im in Fig. 4 dargestellten Fall sind die beiden Fügefasen 12 durch eine konische Verjüngung ausgebildet. Jede Fügefase 12 weist eine Länge L_{F} auf. Diese Länge L_{F} beträgt etwa 0,4 bis 2,5 mm, vorzugsweise 0,6 bis 1,5 mm. In etwa entspricht die Länge L_{F} der Fügefase 12 der Dicke d der Außenlaschen 4. Der Fasenwinkel α der Fügefasen 12 liegt in einem Bereich von etwa 0,3 bis 2°, vorzugsweise 0,5 bis 1°. Der Fasenwinkel ist im vorliegenden Fall der Winkel zwischen der Verlängerung der Mantelfläche des zylindrischen Mittelteils des Bolzens und der Umfangsfläche der Fügefase. Wie bereits beschrieben, ist die Außenfläche A_{F} der Fügefasen 12 konusförmig und entspricht daher im Wesentlichen einem geraden Kreiskegelstumpf. Die Außenfläche der Fügefase muss aber keine exakte konische Fläche darstellen. Es ist ausreichend, wenn der oben beschriebene Bereich der Fasenwinkel eingehalten wird. Es ist dann auch ein progressiver oder degressiver Fasenverlauf möglich.

Der Bolzen 6 ist am Übergang von seiner Umfangsfläche 16 zu den beiden Stirnseiten 15 abgerundet. Diese Abrundung 17 weist einen Radius r von etwa 0,4 mm auf.

Ein wesentlicher Bestandteil der Erfindung ist, dass die Fügefase im Bereich der Pressverbindung 11 zwischen den Öffnungen 5 der Außenlaschen 4 und den Bereichen der Bolzen 6, die in diesen Öffnungen 5 angeordnet sind, ausgebildet wird. Es wäre daher auch denkbar, dass die Fügefase in den jeweiligen Öffnungen der Außenlaschen ausgebildet ist. In diesem Fall sollte die Fügefase den gleichen Verlauf wie oben in Bezug auf den Bolzen beschrieben (Länge, Fasenwinkel, Form, etc.) aufweisen.

Die oben beschriebene Ausbildung einer Fügefase ist nicht auf Hülsenketten beschränkt. Auch bei Rollenketten, in denen auf den Hülsen einer oben beschriebenen Kette zusätzlich je eine Rolle angeordnet ist, ist eine entsprechende Ausgestaltung der Bolzen und/oder der Öffnungen in den Außenlaschen denkbar. Auch bei Ketten, in denen die Innenkettenglieder direkt auf den Bolzen sitzen, beispielsweise Zahnketten oder Wiegegelenkketten, ist eine entsprechende Ausgestaltung der Verbindung zwischen den Bolzen und den Außenlaschen vorteilhaft.

Durch die oben insbesondere in Bezug auf Fig. 4 beschriebene erfindungsgemäße Ausgestaltung der Bolzen der Ketten wird ein besseres Zentrieren der Bolzen in den Öffnungen der Außenlaschen ermöglicht. Aus dem Stand der Technik bekanntes ungünstiges Aufsetzen der Bolzen auf die Außenlaschen bei der Montage, das zu starker Verformung der Außenlaschen bis hin zu Materialausstanzungen an den Außenlaschen führen kann, wird vermieden. Auch dies führt zu einer Verbesserung der Dauerfestigkeit der Ketten.

### Bezugszeichenliste

- 1: Kette
- 2: Außenkettenglied
- 3: Innenkettenglied
- 4: Außenlaschen
- 5: Öffnungen Außenlasche
- 6: Bolzen
- 7: Innenlasche
- 8: Öffnungen Innenlasche
- 9: Hülse
- 10: Kettengelenk
- 11: Pressverbindung
- 12: Fügefase
- 13: Ende Bolzen
- 14: Ende Bolzen
- 15: Stirnseite Bolzen
- 16: Umfangsfläche Bolzen
- 17: Abrundung

- L: Längsrichtung Kette
- L_{F}: Länge Fügefase
- α: Fasenwinkel
- d: Dicke Außenlaschen
- A_{F}: Außenfläche Fügefase

## Patentansprüche

1. Kette (1) für einen Kettentrieb mit einander abwechselnden Innenkettengliedern (3) und Außenkettengliedern (2), die jeweils mittels eines Kettengelenks (10) gelenkig miteinander verbunden sind, wobei jedes Außenkettenglied (2) zwei Außenlaschen (4) mit jeweils zwei Öffnungen (5) und zwei Bolzen (6) umfasst, und wobei die Bolzen (6) und die Öffnungen (5) jeweils mittels einer Pressverbindung (11) miteinander verbunden sind, so dass die Bolzen (6) die Außenlaschen (4) beabstandet zueinander halten, **dadurch gekennzeichnet, dass** im Bereich der Pressverbindung (11) zwischen den Bolzen (6) und den Öffnungen (5) in den Außenlaschen (4) eine Fügefase (12) ausgebildet ist, wobei der Fasenwinkel (α) der Fügefase (12) 0,3° bis 2°, bevorzugt 0,5° bis 1°, beträgt.

2. Kette (1) nach Anspruch 1, **dadurch gekennzeichnet, dass** die Fügefase (12) Bestandteil der Pressverbindung (11) zwischen den Bolzen (6) und den Öffnungen (5) in den Außenlaschen (4) ist.

3. Kette (1) nach Anspruch 1 oder 2, **dadurch gekennzeichnet, dass** die Fügefase (12) an den Bolzen (6) ausgebildet ist.

4. Kette (1) nach einem der Ansprüche 1 bis 3, **dadurch gekennzeichnet, dass** die Länge (L_{F}) der Fügefase (12) 0,4 bis 2,5 mm, bevorzugt 0,6 bis 1,5 mm beträgt

5. Kette (1) nach einem der Ansprüche 1 bis 4, **dadurch gekennzeichnet, dass** die Länge (L_{F}) der Fügefase (12) etwa der Dicke (d) der Außenlaschen (4) entspricht.

6. Kette (1) nach einem der Ansprüche 1 bis 5, **dadurch gekennzeichnet, dass** die Bolzen (6) an beiden Enden (13, 14) eine Fügefase (12) aufweisen.

7. Kette (1) nach einem der Ansprüche 1 bis 6, **dadurch gekennzeichnet, dass** die Fügefase (12) einen linearen Verlauf aufweist.

8. Kette nach einem der Ansprüche 1 bis 6, **dadurch gekennzeichnet, dass** die Fügefase einen progressiven Verlauf aufweist.

9. Kette nach einem der Ansprüche 1 bis 6, **dadurch gekennzeichnet, dass** die Fügefase einen degressiven Verlauf aufweist.

10. Kette (1) nach einem der Ansprüche 1 bis 9, **dadurch gekennzeichnet, dass** die Bolzen (6) an beiden Enden (13, 14) am Übergang von ihren Stirnseiten (15) zu ihrer Umfangsfläche (16) abgerundet sind.

11. Verwendung eines Bolzens (6) in eine Kette (1) nach einem der Ansprüche 1 bis 10, **dadurch gekennzeichnet, dass** an beiden Enden (13, 14) Fügefasen (12) ausgebildet sind, wobei der Fasenwinkel (α) der Fügefase (12) 0,3° bis 2°, bevorzugt 0,5° bis 1°, beträgt.

## Claims

1. Chain (1) for a chain drive with alternating inner chain links (3) and outer chain links (2), which are each connected to each other in an articulated manner by means of a chain joint (10), wherein each outer chain link (2) comprises two outer plates (4) each with two openings (5) and two pins (6), and wherein the pins (6) and the openings (5) are each connected to each other by means of a press connection (11) so that the pins (6) hold the outer plates (4) at a distance from each other, **characterized in that** a joint chamfer (12) is formed in the area of the press connection (11) between the pins (6) and the openings (5) in the outer plates (4), wherein the chamfer angle (α) of the joint chamfer (12) is 0.3° to 2°, preferably 0.5° to 1°.

2. Chain (1) according to claim 1, **characterized in that** the joint chamfer (12) is part of the press connection (11) between the bolts (6) and the openings (5) in the outer plates (4).

3. Chain (1) according to claim 1 or 2, **characterized in that** the joint chamfer (12) is formed on the bolts (6).

4. Chain (1) according to one of claims 1 to 3, **characterized in that** the length (L_{F}) of the joint chamfer (12) is 0.4 to 2.5 mm, preferably 0.6 to 1.5 mm.

5. Chain (1) according to one of claims 1 to 4, **characterized in that** the length (L_{F}) of the joint chamfer (12) corresponds approximately to the thickness (d) of the outer plates (4).

6. Chain (1) according to one of claims 1 to 5, **characterized in that** the pins (6) have a joint chamfer (12) at both ends (13, 14).

7. Chain (1) according to one of claims 1 to 6, **characterized in that** the joint chamfer (12) has a linear course.

8. Chain according to one of claims 1 to 6, **characterized in that** the joint chamfer has a progressive course.

9. Chain according to one of claims 1 to 6, **characterized in that** the joint chamfer has a de-gressive course.

10. Chain (1) according to one of claims 1 to 9, **characterized in that** the pins (6) are rounded at both ends (13, 14) at the transition from their end faces (15) to their circumferential surface (16).

11. Use of a pin (6) in a chain (1) according to one of claims 1 to 10, **characterized in that** on both ends (13, 14) joint chamfers (12) are formed, wherein the chamfer angle (α) of the joint chamfer (12) is approximately 0.3° to 2°, preferably 0.5° to 1°.

## Revendications

1. Chaîne (1) pour une transmission par chaîne comportant une alternance de maillons de chaîne internes (3) et de maillons de chaîne externes (2), connectés de manière articulée par une articulation de chaîne(10), dans laquelle chaque maillon de chaîne externe (2) comprend deux plaques externes (4) pourvues chacune de deux ouvertures (5) et de deux axes (6), et dans laquelle les axes (6) et les ouvertures (5) sont connectés entre eux par une connexion par sertissage (11) de telle sorte que les axes (6) maintiennent les plaques externes (4) espacées entre elles, **caractérisée en ce qu'**un chanfrein d'assemblage (12) est formé dans la zone de la connexion par sertissage (11) entre les axes (6) et les ouvertures (5) dans les plaques externes (4), dans laquelle l'angle de chanfrein (α) du chanfrein d'assemblage (12) est compris entre 0,3° et 2°, de préférence entre 0,5° et 1°.

2. Chaîne (1) selon la revendication 1, **caractérisée en ce que** le chanfrein d'assemblage (12) est un composant de la connexion par sertissage (11) entre les axes (6) et les ouvertures (5) dans les plaques externes (4).

3. Chaîne (1) selon la revendication 1 ou 2, **caractérisée en ce que** le chanfrein d'assemblage (12) est formé sur l'axe (6).

4. Chaîne (1) selon l'une des revendications 1 à 3, **caractérisée en ce que** la longueur (L_{F}) du chanfrein d'assemblage (12) est de 0,4 mm à 2,5 mm, de préférence de 0,6 mm à 1,5 mm.

5. Chaîne (1) selon l'une des revendications 1 à 4, **caractérisée en ce que** la longueur (L_{F}) du chanfrein d'assemblage (12) correspond approximativement à l'épaisseur (d) des plaques externes (4).

6. Chaîne (1) selon l'une des revendications 1 à 5, **caractérisée en ce que** les axes (6) présentent un chanfrein d'assemblage (12) à leurs deux extrémités (13, 14).

7. Chaîne (1) selon l'une des revendications 1 à 6, **caractérisée en ce que** le chanfrein d'assemblage (12) présente un contour linéaire.

8. Chaîne selon l'une des revendications 1 à 6, **caractérisée en ce que** le chanfrein d'assemblage présente un contour progressif.

9. Chaîne selon l'une des revendications 1 à 6, **caractérisée en ce que** le chanfrein d'assemblage présente un contour dégressif.

10. Chaîne (1) selon l'une des revendications 1 à 9, **caractérisée en ce que** les axes (6) sont arrondis à leurs deux extrémités (13, 14) à la transition de leurs faces frontales (15) avec leur surface circonférentielle (16).

11. Utilisation d'un axe (6) dans une chaîne (1) selon l'une des revendications 1 à 10, **caractérisée en ce que** des chanfreins d'assemblage (12) sont formés aux deux extrémités (13, 14), dans laquelle l'angle de chanfrein (α) du chanfrein d'assemblage (12) est compris entre 0,3° et 2°, de préférence entre 0,5° et 1°.
